# EUROPÄISCHE PATENTSCHRIFT

(11) **EP 3 684 639 B1**
(45) Veröffentlichungstag und Bekanntmachung des Hinweises auf die Patenterteilung: **16.03.2022**
(21) Anmeldenummer: 18756404.2
(22) Anmeldetag: 13.08.2018
(51) Int. Cl.: B60K 17/04

(54) **GEHÄUSEEINHEIT UND ACHSENDANORDNUNG**
HOUSING UNIT AND AXLE ASSEMBLY
UNITÉ CARTER ET ENSEMBLE TOURILLON

(30) Priorität: 22.09.2017 DE 102017122017
(43) Veröffentlichungstag der Anmeldung: 29.07.2020
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2018/071880
(87) Internationale Veröffentlichungsnummer: WO 2019/057397

(56) Entgegenhaltungen:
- WO-A1-2018/228800
- FR-A1- 2 529 512
- FR-A1- 2 760 502
- US-A- 2 529 330
- US-A- 3 686 978
- US-A- 3 960 061
- US-A- 4 092 878
- US-A1- 2010 187 042
- US-B1- 9 527 536

## Beschreibung

Die vorliegende Erfindung betrifft eine Gehäuseeinheit und eine Antriebswelle sowie eine Achsendanordnung mit einer solchen Gehäuseeinheit und Antriebswelle. Insbesondere bezieht sich die Erfindung dabei auf eine Gehäuseeinheit zur Anordnung eines Getriebes im Endbereich einer Radlagerung. Solche Getriebe an Achsendanordnungen sind aus dem Stand der Technik zwar bereits bekannt. Bei den aus dem Stand der Technik bekannten Getrieben hat sich aber als problematisch herausgestellt, dass bei Demontage einzelner Teile der Radaufhängung der Achsendanordnung Teile des Getriebes offengelegt werden müssen, um beispielsweise an die Achsmutter oder beispielsweise die Befestigung weiterer Zusatzsysteme im Bereich der Radlagerung gelangen zu können. Dieses Öffnen der Getriebeeinheit ist zum einen mit einem höheren Montageaufwand verbunden. Zum anderen besteht beim Öffnen des Getriebes stets die Gefahr, dass Schmiermittel entweicht und Schmutzkörper in das Getriebe gelangen. Hierdurch ist die Betriebssicherheit des Getriebes gefährdet und es erhöht sich wiederum der Montageaufwand, da besondere Vorsichtsmaßnahmen und saubere Umgebungsbedingungen vorhanden sein müssen, um an von außen gesehen hinter dem Getriebe liegende Bereiche der Achsendanordnung zu gelangen.

US-9,527,536 B1, US-3,686,978 A, FR 2,760,502 A1, FR 2,529,512 A1 und US-3,960,061 A zeigen eine Gehäuseeinheit zum Einsatz in einer Achsendanordnung, aufweisend ein erstes Gehäuseteil und ein zweites Gehäuseteil, wobei das erste und das zweite Gehäuseteil drehbar zueinander angeordnet sind und einen Gehäuseinnenraum definieren.

Aufgabe der vorliegenden Erfindung ist die Bereitstellung einer Gehäuseeinheit zur Bevorratung eines Getriebes, welche von einer Achsendanordnung demontiert werden kann, ohne dass das Innenleben der Gehäuseeinheit geöffnet werden muss. Darüber hinaus ist es eine Aufgabe der vorliegenden Erfindung, eine besonders kompakte Achsendanordnung bereitzustellen.

Diese Aufgaben werden gelöst mit einer Gehäuseeinheit und einer Antriebswelle gemäß Anspruch 1 und einer Achsendanordnung gemäß Anspruch 13.

Erfindungsgemäß sind die der Gehäuse zwei Gehäuseteile, welche einen Gehäuseinnenraum umschließen, welcher im Wesentlichen nach Außen abgeschlossen ist, auch in dem Zustand, in dem die Gehäuseeinheit von der Achsendanordnung demontiert ist. Im Gehäuseinnenraum ist dabei eine Zahnradanordnung vorgesehen, welche mit anderen Worten ein Getriebe bildet. Das erste Gehäuseteil ist dabei an der Nabe einer Achsendanordnung festgelegt oder festlegbar, derart, dass eine Rotationsenergie, die von der Zahnradanordnung auf das erste Gehäuseteil übertragen wird, gleichzeitig auch auf die Nabe der Achsendanordnung übertragen wird. Die Rotationsenergie wiederum wird von einer Antriebswelle, welche vorzugsweise innerhalb eines Stators der Radaufhängung drehbar gelagert ist, an die Zahnradanordnung übertragen. Der Stator ist vorzugsweise ein Achsende einer hohlen, starren Achse eines Nutzfahrzeuges oder ein Achsstummel einer angetriebenen Fahrzeugachse. Der Stator bildet dabei den nicht rotierenden Teil der Achsendanordnung und weist besonders bevorzugt einen Lagersitz zur drehbaren Lagerung der Nabe am Stator auf. Ein wesentliches Merkmal der vorliegenden Erfindung ist, dass das erste und das zweite Gehäuseteil derart aneinander festgelegt sind, dass eine Drehung der beiden Gehäuseteile relativ zueinander um eine Axiale zwar möglich ist, aber eine Verlagerung des ersten Gehäuseteils relativ zum zweiten Gehäuseteil parallel zur Axialen verhindert ist. Dieses Merkmal sorgt dafür, dass nach Lösen der Befestigung des ersten Gehäuseteils an der Radnabe die Gehäuseeinheit als Ganzes von der Achsendanordnung abgezogen werden kann, wobei vorzugsweise der Gehäuseinnenraum im Wesentlichen abgeschlossen bleibt. Im Wesentlichen abgeschlossen bedeutet in diesem Zusammenhang, dass der überwiegende Teil, zumindest 70% bevorzugt zumindest 80% und besonders stark bevorzugt zumindest 90%, der nach außen ragenden Flächen der Gehäuseeinheit abgeschlossen, insbesondere fluiddicht verschlossen, sind, wobei in einer ersten bevorzugten Ausführungsform lediglich eine Öffnung vorgesehen ist, durch welche die Antriebswelle, gegebenenfalls mit einem daran befestigten ersten Zahnrad, hindurchgeführt werden kann. Durch diese im Wesentlichen abgeschlossene Auslegung des Gehäuseinnenraumes ist es möglich, die Gehäuseeinheit von der Achsendanordnung abzunehmen und dabei zu verhindern, dass Fremdkörper in die Gehäuseeinheit gelangen. Auf diese Weise kann die Lebensdauer der Gehäuseeinheit deutlich erhöht werden.

Mit Vorteil ist im Bereich des Eingriffsabschnitts am zweiten Gehäuseteil eine Aussparung vorgesehen, durch welche die Antriebswelle hindurchführbar ist. Mit Vorteil ist bei einer von der Radaufhängung demontierten Gehäuseeinheit der Gehäuseinnenraum ausschließlich im Bereich des Eingriffsabschnitts zur Umgebung hin offen. Dabei ist im Bereich des Eingriffsabschnitts die Aussparung vorgesehen, durch welche die Antriebswelle, ggf. mit einem daran befestigten Zahnrad, in den Gehäuseinnenraum eingeschoben werden kann. Vorteilhaft ist es, wenn der Gehäuseinnenraum an sämtlichen anderen Flächen abgeschlossen ist und hermetisch, insbesondere fluiddicht, von der Umgebung abgegrenzt ist. Auf diese Weise kann zum einen das Eindringen von Fremdkörpern in die Gehäuseeinheit verhindert werden, zum anderen ist es möglich, den Verlust von Schmiermitteln aus der Gehäuseeinheit zu verhindern.

Die Aussparung im Bereich des Eingriffsabschnitts weist dabei mit Vorteil einen minimalen Innendurchmesser auf, der ein 1,05- bis 1,3-faches des maximalen Außendurchmessers der Antriebswelle oder des maximalen Außendurchmessers eines ersten Zahnrades der Zahnradanordnung beträgt. Mit anderen Worten ist die Aussparung am zweiten Gehäuseteil vorzugsweise nur wenig größer als entweder die Antriebswelle oder ein gemeinsam mit der Antriebswelle in den Gehäuseinnenraum einschiebbares erstes Zahnrad. Auf diese Weise kann die Gefahr des Eindringens von Fremdkörpern minimiert werden. Das Mindestverhältnis zwischen dem Innendurchmesser der Aussparung und dem maximalen Außendurchmesser des jeweils in die Gehäuseeinheit einzuschiebenden Teils von 1,05 ist dabei vorzugsweise ausreichend, so dass selbst bei großen Temperaturunterschieden und einer entsprechenden Ausdehnung des Zahnrades oder der Antriebswelle genügend Spiel zum freien Lauf bzw. zur freien Drehbewegung der Antriebswelle innerhalb der Aussparung vorhanden ist. Als minimaler Innendurchmesser wird dabei vorzugsweise die geringste Erstreckung der Aussparung quer zu einer Axialen, um welche sich die Antriebswelle dreht, angesehen. Die entsprechende Erstreckung oder der maximale Außendurchmesser der Antriebswelle oder des ersten Zahnrades wird parallel zu der Erstreckungsrichtung des minimalen Innendurchmessers gemessen. Die Obergrenze des Verhältnisbereiches von 1,3 sorgt dafür, dass die Aussparung am zweiten Gehäuseteil eine besonders einfache Montage ohne die Gefahr von Verklemmungen aufweist und zudem eine gewisse Verschwenkbarkeit der Antriebswelle um eine Senkrechte zur Axialen erlaubt. Gleichzeitig soll dabei aber die Aussparung weiterhin möglichst klein gehalten werden, um bei demontierter Gehäuseeinheit nur eine geringe Eintrittsfläche für das Eindringen von Fremdkörpern in den Gehäuseinnenraum zu erlauben und somit die Betriebssicherheit der Gehäuseeinheit zu erhöhen.

In einer alternativen Ausführungsform ist der Gehäuseinnenraum bei von der Radaufhängung demontierter Gehäuseeinheit vollständig abgeschlossen bzw. zur Umgebung hin gekapselt, wobei ein Wellenelement aus dem Gehäuseinnenraum ragt und mittels einer Wellendichtung gegenüber dem zweiten Gehäuseteil abgedichtet ist. Alternativ dazu am zweiten Gehäuseteil eine Aussparung offenzulassen, durch welche die Antriebswelle oder das erste Zahnrad eingeschoben werden kann, ist der Gehäuseinnenraum vorzugsweise vollständig abgedichtet. Hierzu ist ein Wellenelement vorgesehen, welches mit dem ersten Zahnrad in Verbindung steht bzw. ausgebildet ist und aus dem Gehäuseinnenraum herausragt. Dabei ist eine Wellendichtung vorzugsweise in die zuvor beschriebene Aussparung am zweiten Gehäuseteil eingesetzt und festgelegt, welche gemeinsam mit der Querschnittsfläche der Antriebswelle den Gehäuseinnenraum vollständig abdichtet. Mit dieser Ausführungsform ist die höchste Betriebssicherheit der Gehäuseeinheit erreichbar, da der Gehäuseinnenraum im montierten und demontierten Zustand der Gehäuseeinheit vollständig abgedichtet ist.

Besonders bevorzugt ist dabei am Wellenelement ein Übertragungsabschnitt vorgesehen, mit welchem die Antriebswelle in formschlüssigen Eingriff zur Übertragung eines Drehmoments gebracht werden kann. Besonders bevorzugt ist es dabei, dass der Übertragungsabschnitt als eine Kombination aus Vor- und Rücksprüngen, welche sich parallel bzw. längs der Axialen erstrecken, ausgebildet ist, wobei die Antriebswelle eine korrespondierende Anordnung von Vor- und Rücksprüngen aufweist, welche zur Übertragung eines Drehmoments von der Antriebswelle an das Wellenelement geeignet sind. Vorzugsweise ist das Wellenelement dabei längs der Axialen auf die Antriebswelle aufsteckbar, um im aufgesteckten Zustand eine Hinterschneidung der Antriebswelle zu bilden, welche ein Drehmoment um die Axiale bzw. die Rotationsachse der Antriebswelle an die Zahnradanordnung erlaubt. Mit anderen Worten ist der Übertragungsabschnitt als Axialverzahnung bzw. Stirnverzahnung ausgebildet.

Mit Vorteil sichert die Festlegung des Flansches an der Nabe die Gehäuseeinheit gegen Verlagerung längs der Axialen. Besonders bevorzugt ist dabei die Festlegung des Flansches an der Nabe die einzige axiale Sicherung der Gehäuseeinheit. Hierdurch kann die Gehäuseeinheit von außen vollständig und ohne demontiert zu werden durch Lösen der Befestigung des Flansches an der Nabe von der Radaufhängung bzw. der Achsendanordnung abgenommen werden. Die Verbindung des zweiten Gehäuseteils mit dem Stator der Achsendanordnung ist vorzugsweise als Steckverbindung ausgeführt, welche längs der Axialen lediglich unter Überwindung eines geringen Reibungswiderstandes hergestellt und auch wieder gelöst werden kann.

Die Axiale ist vorzugsweise die Rotationsachse eines an der Achsendanordnung festgelegten Fahrzeugrades bzw. der Nabe, an welcher das erste Gehäuseteil festlegbar ist.

Besonders bevorzugt ist der Eingriffsabschnitt des zweiten Gehäuseteils als zylindrischer Abschnitt mit einer Außenverzahnung ausgebildet, wobei der Eingriffsabschnitt längs der Axialen in den Stator einschiebbar ist, um mit einer Innenverzahnung am Stator in drehfesten Eingriff zu gelangen. Bei dieser bevorzugten Ausführungsform greift der Eingriffsabschnitt des zweiten Gehäuseteils vorzugsweise in einen hohlkörperförmigen Bereich des Stators, vorzugsweise des Achsrohres oder des Achsstummels, ein, wobei über eine Verzahnung die Verdrehsicherung zwischen dem Eingriffsabschnitt und dem Stator hergestellt wird. Die Verzahnung, also sowohl die Außenverzahnung am Eingriffsabschnitt als auch die Innenverzahnung am Stator erstreckt sich dabei vorzugsweise mit gleichbleibender Geometrie längs der Axialen. Auf diese Weise kann der Eingriffsabschnitt mit händischer Kraft in den Stator eingeschoben werden. Vorteil dieser Ausführungsform ist, dass am Stator im Bereich der Überlappung mit dem Eingriffsabschnitt außen eine Lageranordnung zur Lagerung der Nabe und/oder eine Mutter für die Vorspannung der Lager festgelegt werden kann. Es wird auf diese Weise die erforderliche Länge des Stators parallel zur Axialen verringert, wodurch insbesondere bevorzugt die Lagerung der Nabe und damit des Fahrzeugrades weiter außen längs der Axialen am Stator vorgesehen sein kann. Auf das Gesamtsystem der Achsendanordnung bezogen bedeutet dies, dass bei einer vorgegebenen maximalen Außenbreite der Achse die Lager möglichst weit außen an der Achse angeordnet werden können und somit eine hohe Spurbreite erreicht werden kann. Auf diese Weise lässt sich der an der Achsendanordnung vorgesehene Bauraum besonders optimal ausnutzen.

In einer alternativen Ausführungsform ist der Eingriffsabschnitt als zylindrischer Abschnitt mit einer Innenverzahnung ausgebildet, wobei der Eingriffsabschnitt längs der Axialen auf den Stator aufschiebbar ist, um mit einer Außenverzahnung am Stator in drehfesten Eingriff zu gelangen. Bei dieser bevorzugten Ausführungsform ist der Eingriffsabschnitt vorzugsweise als Bohrung ausgeführt, welche mit einer Innenverzahnung versehen ist. Am Stator ist eine entsprechende Außenverzahnung vorgesehen, auf welche der Eingriffsabschnitt aufschiebbar ist. Diese Ausführungsform bietet sich insbesondere dann an, wenn ein Stator mit geringem Durchmesser verwendet werden soll. Dabei ist der Eingriffsabschnitt nicht davon abhängig, dass am Stator eine entsprechend große Aussparung, welche sowohl den Eingriff des Eingriffsabschnitts, als auch das Hindurchführen der Antriebswelle erlaubt, vorhanden ist. Weiterhin ist diese Ausführungsform geeignet, auch an bereits existierenden Achsendanordnungen zum Einsatz zu gelangen, wobei diese lediglich um den Bereich der Außenverzahnung für den Eingriff mit dem Eingriffsabschnitt verlängert werden müssen und ansonsten unverändert für die Aufnahme der Gehäuseeinheit geeignet sind.

Besonders bevorzugt überlappt das erste Gehäuseteil das zweite Gehäuseteil, vorzugsweise entlang der Axialen, bereichsweise, wobei im Bereich dieser Überlappung ein Dichtungselement vorgesehen ist, welches den Gehäuseinnenraum abdichtet, wobei das Dichtungselement das erste und das zweite Gehäuseteil in ihrer axialen Stellung zueinander sichert. Das Dichtungselement zur Abdichtung des Gehäuseinnenraumes führt dabei neben dieser Aufgabe noch eine zweite Aufgabe aus, nämlich, dass eine axiale Verlagerungssicherung des ersten Gehäuseteils und des zweiten Gehäuseteils zueinander durch das Dichtungselement bereitgestellt wird. Auf diese Weise kann erreicht werden, dass, wenn das erste Gehäuseteil von der Nabe abgeschraubt wird und entsprechend vom Anwender längs der Axialen von der Achsendanordnung weggezogen wird, über das Dichtungselement auch das zweite Gehäuseteil von seinem Eingriff mit dem Stator abgezogen wird. Besonders bevorzugt ist das Dichtungselement hierfür ein entsprechend verstärkter Wellendichtring.

Besonders bevorzugt ist das Dichtungselement in das erste Gehäuseteil eingepresst. Weiterhin bevorzugt ist es, dass das Dichtungselement im zusammengebauten Zustand der Gehäuseeinheit eine Hinterschneidung mit dem zweiten Gehäuseteil bildet, derart, dass das Dichtungselement unter Überwindung eines bestimmten Widerstandes auch auf das zweite Gehäuseteil aufgeschoben ist. Weiterhin bevorzugt kann das Dichtungselement über einen oder eine Vielzahl von Sprengringen am ersten und/oder am zweiten Gehäuseteil in axialer Richtung gesichert sein. Der jeweilige Sprengring greift dabei in eine entsprechende Nut am ersten oder am zweiten Gehäuseteil ein.

Weiterhin bevorzugt weist die Zahnradanordnung ein erstes Zahnrad auf, welches mittelbar oder unmittelbar von der Antriebswelle antreibbar oder angetrieben ist, wobei die Zahnradanordnung zumindest ein zweites Zahnrad umfasst, welches drehbar am zweiten Gehäuseteil festgelegt ist und in eine erste Innenverzahnung am ersten Gehäuseteil eingreift. Die Zahnradanordnung bildet in dieser Ausführungsform mit dem ersten und dem zweiten Gehäuseteil der Gehäuseeinheit ein Umlaufrädergetriebe, auch Planetengetriebe. Dabei ist das erste Zahnrad in dieser Ausführungsform das Sonnenrad, das zweite oder vorzugsweise die Vielzahl von zweiten Zahnrädern bilden die Planetenräder, welche drehbar am feststehenden zweiten Gehäuseteil festgelegt sind, wobei das zweite Gehäuseteil als Haltesteg des Umlaufrädergetriebes fungiert. Das erste Gehäuseteil weist eine Innenverzahnung auf und fungiert in diesem Zusammenhang als Hohlrad des Umlaufrädergetriebes. Diese Ausführungsform der Zahnradanordnung zeichnet sich durch ihre besonders kurze Baulänge auf, wobei mittlere Übersetzungsverhältnisse erzielt werden können.

In einer alternativen Ausführungsform umfasst die Zahnradanordnung ein erstes Zahnrad, welches mittelbar oder unmittelbar von der Antriebswelle antreibbar oder angetrieben ist, wobei die Zahnradanordnung zumindest ein zweites Zahnrad umfasst, welches in eine zweite Innenverzahnung am zweiten Gehäuseteil eingreift und ein Drehmoment an ein drittes Zahnrad überträgt, welches in eine erste Innenverzahnung am ersten Gehäuseteil eingreift. Diese Anordnung der Zahnradanordnung und der Gehäuseeinheit wird als sogenanntes Wolfrom-Getriebe bezeichnet. Dabei greift das zweite Zahnrad nicht wie zuvor beschrieben in das Innengewinde am ersten Gehäuseteil ein, sondern zunächst in ein Innengewinde, welches am zweiten Gehäuseteil ausgebildet ist. Das zweite Zahnrad ist dabei jeweils mit einem dritten Zahnrad über eine Welle drehfest verbunden, so dass die Drehzahl des zweiten Zahnrades auf ein drittes Zahnrad übertragen wird, welches wiederum in ein Innengewinde am ersten Gehäuseteil eingreift. Durch eine entsprechende Veränderung der Zähnezahl des zweiten Zahnrades relativ zum dritten Zahnrad ist es hier möglich, Übersetzungsverhältnisse von über 40 mittels der Gehäuseeinheit und der Zahnradanordnung zu erreichen. Gleichzeitig ist ein Wolfrom-Getriebe besonders kompakt ausgebildet und weist nur eine wenig größere axiale Erstreckung auf als das herkömmliche Planetengetriebe, wie zuvor beschrieben. Es versteht sich, dass zur Sicherung und Lagerung der Welle, welche das zweite mit dem jeweiligen dritten Zahnrad verbindet, ein scheibenförmig ausgebildeter Steg vorgesehen sein kann, welcher ebenfalls um die Axiale rotiert.

Weiterhin erfindungsgemäß ist eine Achsendanordnung gemäss Anspruch 13.

Die Achsendanordnung ist somit mit anderen Worten eine Radlagerung, vorzugsweise eines Nutzfahrzeuges, an welcher eine zuvor beschriebene Gehäuseeinheit festgelegt ist. Das Merkmal, wonach die Gehäuseeinheit einen Gehäuseinnenraum umschließt, welcher gegenüber der Umgebung im Wesentlichen abgeschlossen ist, bezieht sich dabei jedoch nicht nur auf den an der Achsendanordnung festgelegten Zustand, sondern auch auf den Zustand, in welchem die Gehäuseeinheit von der Achsendanordnung demontiert ist. Bezüglich der weiteren Merkmale der Achsendanordnung wird auf die zuvor beschriebenen Merkmale und Interaktionen zwischen den einzelnen Baugruppen verwiesen.

Bevorzugt ist an der Achsendanordnung der Eingriffsabschnitt als zylindrischer Abschnitt mit einer Außenverzahnung ausgebildet, wobei am Stator eine parallel zu einer axial verlaufenden Innenverzahnung vorgesehen ist, welche sich auf gleicher Höhe längs der Axialen wie ein Lagersitz zur drehbaren Lagerung der Nadel am Stator und/oder eine Achsmutter befindet. Mit anderen Worten kann somit die axiale Länge des Stators auf der Innenseite zur Festlegung des Eingriffsabschnitts und auf der Außenseite zur drehbaren Lagerung der Nabe und zur Festlegung einer Achsmutter optimal ausgenutzt werden, wodurch sich die axiale Länge der Achsendanordnung verringert. Es kann auf diese Weise eine Spurverbreiterung gegenüber herkömmlichen Achsendanordnungen mit daran angeordnetem Gewinde erreicht werden.

Weiterhin bevorzugt ist der Flansch des ersten Gehäuseteils über eine Vielzahl von Radbolzen an der Nabe festgelegt. Vorzugsweise sind die Radbolzen gleichmäßig über einen Nabenflansch der Nabe verteilt angeordnet, wobei zunächst der Flansch des ersten Gehäuseteils gemeinsam mit der gesamten Gehäuseeinheit auf diese Radbolzen aufgeschoben wird und anschließend das Rad eines Fahrzeuges auf die Radbolzen aufgeschoben werden kann, um schließlich mit der Radmutter festgelegt zu werden. Die Verwendung von Radbolzen zur Festlegung der Nabe und eines Fahrzeugrades erleichtert die Montage, da die Nabe und auch das Fahrzeugrad auf die Radbolzen aufgeschoben werden können und erst anschließend im aufgeschobenen Zustand verschraubt werden.

Weitere Vorteile und Merkmale der vorliegenden Erfindung ergeben sich aus der nachfolgenden Beschreibung mit Bezug auf die beigefügten Figuren. Es versteht sich dabei, dass einzelne Merkmale, die nur in einer der Figuren gezeigt sind, auch in Ausführungsformen anderer Figuren Einsatz finden können, sofern dies nicht explizit ausgeschlossen wurde oder sich aufgrund technischer Gegebenheiten verbietet. Es zeigen:
- Fig. 1: eine Schnittansicht einer ersten bevorzugten Ausführungsform der erfindungsgemäßen Achsendanordnung,
- Fig. 2: eine Schnittansicht einer weiteren bevorzugten Ausführungsform der erfindungsgemäßen Achsendanordnung,
- Fig. 3: eine Schnittansicht einer bevorzugten Ausführungsform der erfindungsgemäßen Gehäuseeinheit,
- Fig. 4: eine Schnittansicht einer weiteren bevorzugten Ausführungsform der erfindungsgemäßen Achsendanordnung.

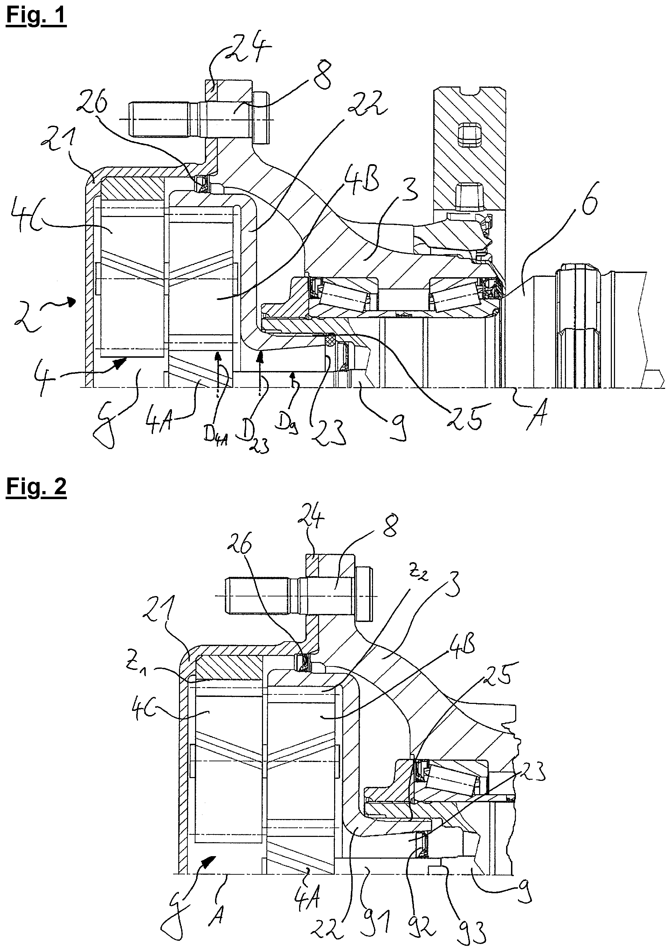

Fig. 1 zeigt eine Achsendanordnung mit einem Stator 6, welcher als Achsstummel ausgebildet ist, einer Nabe 3, welche drehbar am Stator 6 gelagert ist, und einer Gehäuseeinheit 2. Die Gehäuseeinheit 2 weist ein erstes Gehäuseteil 21 und ein zweites Gehäuseteil 22 auf, wobei das erste Gehäuseteil 21 über einen Flansch 24 an der Nabe 3 festlegbar ist. Figur 1 zeigt dabei den Zustand, in dem die Gehäuseeinheit 2 lediglich auf die Achsendanordnung aufgesteckt ist, ohne dass bereits eine Radmutter zur endgültigen Festlegung der Gehäuseeinheit gemeinsam mit dem Rad eines Nutzfahrzeuges vorgesehen ist. In Figur 1 erkennbar ist, dass das erste Gehäuseteil 21 in der Nähe des Flansches 24 einen Zentriersitz aufweist, welcher es erlaubt, ein Rad auf das erste Gehäuseteil 21 aufzuschieben und dabei gleichzeitig zu zentrieren. Das erste Gehäuseteil 21 selbst ist dabei über den Flansch 24 am zylindrisch ausgebildeten Zentrierbereich des Radbolzens 8 zentriert. Zwischen dem ersten Gehäuseteil 21 und dem zweiten Gehäuseteil 22 ist ein Dichtungselement vorgesehen, welches vorzugsweise als Wellendichtring ausgebildet ist. Das zweite Gehäuseteil 22 weist hierfür einen Bereich auf, mit welchem es in das erste Gehäuseteil 21 eingesteckt ist bzw. mit diesem überlappt. Innerhalb des ersten und des zweiten Gehäuseteiles 21, 22 ist ein Gehäuseinnenraum G gebildet, in welchem eine Zahnradanordnung 4 angeordnet ist. Bei der vorliegenden Ausführungsform bilden die Zahnradanordnung und das erste Gehäuseteil 21 und das zweite Gehäuseteil 22 zusammen ein sogenanntes Wolfrom-Getriebe. Dabei ist eine Antriebswelle 9, welche innerhalb des im Stator 6 freigelassenen Hohlraumes angeordnet ist, in das erste Zahnrad 4A eingesteckt und überträgt vorzugsweise über eine Verzahnung ein Drehmoment auf das erste Zahnrad 4A. Dieses Zahnrad steht mit vorzugsweise einer Vielzahl von zweiten Zahnrädern 4B in Eingriff, wobei die zweiten Zahnräder 4B wiederum am zweiten Gehäuseteil 22 abrollen und in eine zweite an diesem Gehäuseteil 22 vorgesehene Innenverzahnung Z₂ eingreifen. Die zweiten Zahnräder 4B sind dabei über eine Welle drehfest mit dritten Zahnrädern 4C verbunden, wobei die dritten Zahnräder 4C mit einer ersten Innenverzahnung Z₁, welche am ersten Gehäuseteil 21 ausgebildet ist, in Eingriff stehen. Der axiale Abstand der zweiten Zahnräder 4B zu den dritten Zahnrädern 4C ist dabei besonders kurz gewählt, wobei vorzugsweise hier auch ein scheiben- bzw. blechförmiges Halteelement vorgesehen sein kann, welches die zweiten Zahnräder 4B und die dritten Zahnräder 4C dagegen sichert, zu verkippen oder sich nach innen in Richtung der Axialen A zu verlagern. Das zweite Gehäuseteil 22 weist einen Eingriffsabschnitt 25 auf, welcher eine Au-ßenverzahnung aufweist und in einem Hohlraum am Stator 6 eingeschoben ist. Der Stator 6 weist hierfür eine Innenverzahnung auf, welche eine Verdrehsicherung mit der Außenverzahnung des Eingriffsabschnitts 25 eingeht. Der Vorteil dieser Ausführungsform ist, dass auf Höhe des Eingriffs zwischen dem Stator 6 und dem Eingriffsabschnitt 25 an der Außenseite des Stators gleichzeitig eine Radmutter sowie die Lageranordnung zur drehbaren Lagerung der Nabe 3 am Stator 6 angeordnet werden können. Auf diese Weise kann die axiale Länge der Achsendanordnung sehr gering gehalten werden. Weiterhin ist eine erste Ausführungsform gezeigt, wonach an dem zweiten Gehäuseteil 22 im Bereich des Eingriffsabschnitts 25 eine Aussparung bzw. Öffnung 23 vorgesehen ist, durch welche die Antriebswelle 9, vorzugsweise auch das erste Zahnrad 4A hindurchgeschoben werden können. Dabei weist die Aussparung 23 einen minimalen Durchmesser D₂₃ auf, der größer ist als der Durchmesser des Teils, welches durch die Aussparung hindurchgeschoben werden soll. Im vorliegenden Fall ist der minimale Durchmesser D₂₃ der Aussparung 23 größer als der maximale Außendurchmesser D_{4A} des ersten Zahnrades 4A. Es versteht sich, dass in einer alternativen Ausführungsform, wenn nur die Antriebswelle 9 durch die Aussparung 23 geschoben werden muss, der minimale Innendurchmesser D₂₃ größer sein muss als der maximale Außendurchmesser D₉ der Antriebswelle 9. Bei dieser Ausführungsform ist somit der Gehäuseinnenraum G nur im Bereich der Aussparung 23 zur Umgebung hin offen, wenn die Gehäuseeinheit 2 von der Achsendanordnung abgenommen wird.

Fig. 2 zeigt eine weitere bevorzugte Ausführungsform der erfindungsgemäßen Achsendanordnung, wobei im Unterschied zu der in Fig. 1 gezeigten Ausführungsform ein Wellenelement 91 vorgesehen ist, welches über eine Wellendichtung 92 gegenüber der Aussparung 23 am zweiten Gehäuseteil 22 abgedichtet ist. Das Wellenelement 91 ragt somit aus dem Gehäuseinnenraum G heraus, wobei der Gehäuseinnenraum G im Unterschied zu der in Fig. 1 gezeigten Ausführungsform vollständig gegenüber der Umgebung abgekapselt ist. Am Wellenelement 91 ist ein Übertragungsabschnitt 93 vorgesehen, welcher eine Drehmomentübertragung zwischen einer Antriebswelle 9 und dem Wellenelement 91 erlaubt. Dabei ist die Antriebsachse 9 vorzugsweise parallel zur Axialen A auf das Wellenelement 91 aufsteckbar. Die Wellendichtung 92 ist vorzugsweise in die Aussparung 23 am zweiten Gehäuseteil eingepresst. Die übrigen Merkmale der Ausführungsform von Figur 2 entsprechen den Merkmalen der Ausführungsform in Figur 1.

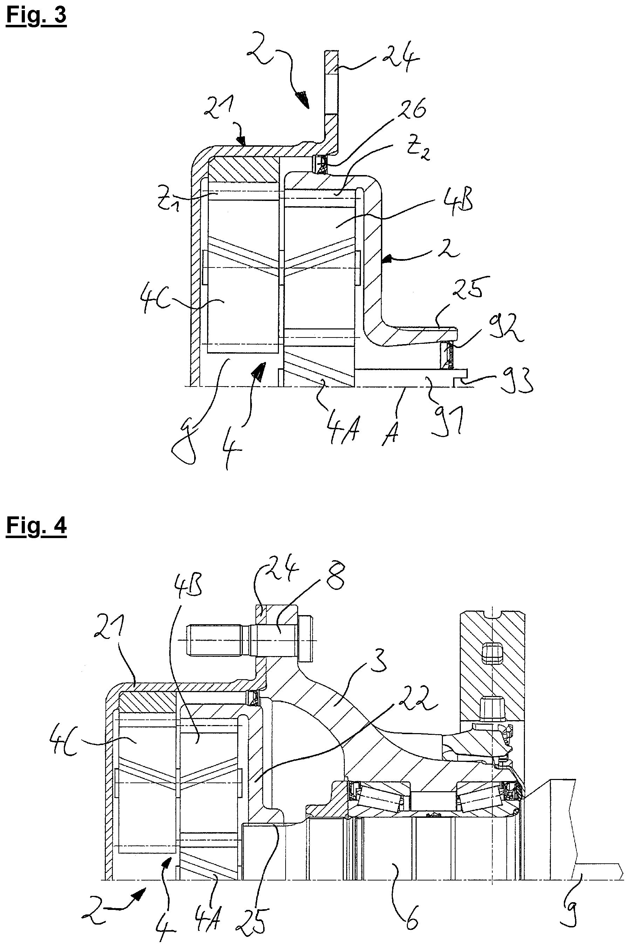

Fig. 3 zeigt die bereits in Figur 2 gezeigte bevorzugte Ausführungsform einer erfindungsgemäßen Gehäuseeinheit, wobei insbesondere deutlich wird, dass die Gehäuseeinheit und insbesondere der Gehäuseinnenraum G vollständig abgekapselt sind, auch wenn die Gehäuseeinheit 2 von der Radlagerung abgenommen ist. Der Gehäuseinnenraum G wird dabei durch das erste Gehäuseteil 21, das zweite Gehäuseteil 22, das zwischen diesen beiden Gehäuseteilen vorgesehene Dichtungselement 26, die Wellendichtung 92 sowie das Wellenelement 91 umschlossen. Auf diese Weise ist der Gehäuseinnenraum G als vollständig und hermetisch gegenüber der Umgebung abgeschlossener Raum ausgeführt.

Fig. 4 schließlich zeigt eine Schnittansicht einer weiteren bevorzugten Ausführungsform, bei der der Eingriffsabschnitt 25 des zweiten Gehäuseteils 22 im Vergleich zu den zuvor gezeigten Ausführungsformen variiert ist. Bei dieser Ausführungsform ist der Eingriffsabschnitt 25 als Aussparung am zweiten Gehäuseteil 22 ausgebildet und weist eine Innenverzahnung auf. Mit dieser Innenverzahnung ist der Eingriffsabschnitt 25 auf eine entsprechende Außenverzahnung, welche am distalen Ende des Stators 6 ausgebildet ist, aufschiebbar. Im Vergleich zu den zuvor gezeigten Ausführungsformen ergibt sich dadurch eine größere axiale Länge der Achsendanordnung, da links von der Radmutter noch ein zusätzlicher Platz geschaffen werden muss, in welchem der Eingriffsabschnitt 25 und der Stator 6 ineinander greifen können. Der Vorteil dieser Ausführungsform ist, dass sie mit wenigen Modifikationen an vielen existierenden Achsstummeln und Achsendanordnungen eingesetzt werden kann. Darüber hinaus ergeben sich durch den etwas weiter außen liegenden Teilkreis der Verzahnung zwischen dem Eingriffsabschnitt 25 und dem Stator 6 bessere Flächenträgheitsmomente und ein größerer Hebelarm für auf diese Verbindung wirkende Drehmomente. Die Verzahnung zwischen dem Eingriffsabschnitt 25 und dem Stator 6 kann somit mit kleineren Zähnen und einer geringeren Überschneidung und somit mit geringerem Fertigungsaufwand hergestellt werden. Die übrigen Merkmale der in Fig. 4 gezeigten Ausführungsform entsprechen denen der in Fig. 1 gezeigten Ausführungsform.

**Bezugszeichen:**

| | | | |
|---|---|---|---|
| 2 | - Gehäuseeinheit | 4A | - erstes Zahnrad |
| 21 | - erstes Gehäuseteil | 4B | - zweites Zahnrad |
| 22 | - zweites Gehäuseteil | 4C | - drittes Zahnrad |
| 23 | - Aussparung | 6 | - Stator |
| 24 | - Flansch | 8 | - Radbolzen |
| 25 | - Eingriffsabschnitt | 9 | - Antriebswelle |
| 26 | - Dichtungselement | 91 | - Wellenelement |
| 3 | - Nabe | 92 | - Wellendichtung |
| 4 | - Zahnradanordnung | 93 | - Übertragungsabschnitt |
| D₂₃ | - minimaler Innendurchmesser | G | - Gehäuseinnenraum |
| D₉ | - maximaler Außendurchmesser | Z₁ | - erste Innenverzahnung |
| D_{4A} - | maximaler Außendurchmesser | Z₂ | - zweite Innenverzahnung |
| A | - Axiale | | |

## Patentansprüche

1. häuseeinheit (2) und Antriebswelle (9) zum Einsatz in einer Achsendanordnung, insbesondere eines Nutzfahrzeugs,
wobei die Gehäuseeinheit (2) ein erstes Gehäuseteil (21) und ein zweites Gehäuseteil (22) aufweist,
wobei das erste und das zweite Gehäuseteil (21, 22) drehbar zueinander angeordnet sind und einen Gehäuseinnenraum (G) definieren,
wobei das erste Gehäuseteil (21) einen Flansch (24) zur Festlegung an einer Nabe (3) aufweist,
wobei das zweite Gehäuseteil (22) einen Eingriffsabschnitt (25) zur Verdrehsicherung gegenüber einem Stator (6) einer Radaufhängung aufweist, wobei eine Zahnradanordnung (4) im Gehäuseinnenraum (G) angeordnet ist, um ein Drehmoment einer Antriebswelle (9) an das erste Gehäuseteil (21) zu übertragen,
wobei die Antriebswelle (9) innerhalb des Stators (6) drehbar gelagert werden kann,
**dadurch gekennzeichnet, dass** das erste und das zweite Gehäuseteil (21, 22) derart aneinander festgelegt sind, dass bei Demontage der Gehäuseeinheit (2) von der Radaufhängung der Gehäuseinnenraum (G) derart abgeschlossen bleibt, dass zumindest 70 % der nach außen ragenden Flächen der Gehäuseeinheit (2) fluiddicht verschlossen sind.

2. Gehäuseeinheit (2) und Antriebswelle (9) nach Anspruch 1, wobei bei von der Radaufhängung demontierter Gehäuseeinheit (2) der Gehäuseinnenraum (G) ausschließlich im Bereich des Eingriffsabschnitts (25) zur Umgebung hin offen ist.

3. Gehäuseeinheit (2) und Antriebswelle (9) nach Anspruch 2, wobei im Bereich des Eingriffsabschnitts (25) am zweiten Gehäuseteil (22) eine Aussparung (23) vorgesehen ist, durch welche die Antriebswelle (9) hindurchführbar ist.

4. Gehäuseeinheit (2) und Antriebswelle (9) nach Anspruch 3, wobei die Aussparung (23) einen minimalen Innendurchmesser (D₂₃) aufweist, der ein 1,05- bis 1,3-faches des maximalen Außendurchmessers (D₉) der Antriebswelle (9) oder des maximalen Außendurchmessers (D_{4A}) eines ersten Zahnrades (4A) der Zahnradanordnung (4) beträgt.

5. Gehäuseeinheit (2) und Antriebswelle (9) nach Anspruch 1,
wobei der Gehäuseinnenraum (G) bei von der Radaufhängung demontierter Gehäuseeinheit (2) vollständig geschlossen ist,
wobei ein Wellenelement (91) aus dem Gehäuseinnenraum (G) ragt und mittels einer Wellendichtung (92) gegenüber dem zweiten Gehäuseteil (22) abgedichtet ist.

6. Gehäuseeinheit (2) und Antriebswelle (9) nach Anspruch 5, wobei am Wellenelement (91) ein Übertragungsabschnitt (93) vorgesehen ist, mit welchem die Antriebswelle (9) in formschlüssigen Eingriff zur Übertragung eines Drehmoments gebracht werden kann.

7. Gehäuseeinheit (2) und Antriebswelle (9) nach einem der vorhergehenden Ansprüche, wobei die Festlegung des Flansches (25) an der Nabe (3) die Gehäuseeinheit (2) gegen Verlagerung längs einer Axialen (A) sichert.

8. Gehäuseeinheit (2) und Antriebswelle (9) nach Anspruch 7,
wobei der Eingriffsabschnitt (25) als zylindrischer Abschnitt mit einer Außenverzahnung ausgebildet ist,
wobei der Eingriffsabschnitt (25) längs der Axialen (A) in den Stator (6) einschiebbar ist, um mit einer Innenverzahnung am Stator (6) in drehfesten Eingriff zu gelangen.

9. Gehäuseeinheit (2) und Antriebswelle (9) nach Anspruch 7,
wobei der Eingriffsabschnitt (25) als zylindrischer Abschnitt mit einer Innenverzahnung ausgebildet ist,
wobei der Eingriffsabschnitt (25) längs der Axialen (A) auf den Stator (6) aufschiebbar ist, um mit einer Außenverzahnung am Stator (6) in drehfesten Eingriff zu gelangen.

10. Gehäuseeinheit (2) und Antriebswelle (9) nach einem der vorhergehenden Ansprüche,
wobei das erste Gehäuseteil (21) das zweite Gehäuseteil (22) bereichsweise überlappt,
wobei im Bereich dieser Überlappung ein Dichtungselement (26) vorgesehen ist, welches den Gehäuseinnenraum (G) abdichtet,
wobei das Dichtungselement (26) das erste und das zweite Gehäuseteil (21,22) in ihrer axialen Stellung zueinander sichert.

11. Gehäuseeinheit (2) und Antriebswelle (9) nach Anspruch 10, wobei das Dichtungselement (26) in das erste Gehäuseteil (21) eingepresst ist.

12. Gehäuseeinheit (2) und Antriebswelle (9) nach einem der vorhergehenden Ansprüche,
wobei die Zahnradanordnung (4) ein erstes Zahnrad (4A) umfasst, welches mittelbar oder unmittelbar von der Antriebswelle (9) antreibbar oder angetrieben ist,
wobei die Zahnradanordnung (4) zumindest ein zweites Zahnrad (4B) umfasst, welches in eine zweite Innenverzahnung (Z₂) am zweiten Gehäuseteil (22) eingreift und ein Drehmoment an ein drittes Zahnrad (4C) überträgt, welches in eine erste Innenverzahnung (Z₁) am ersten Gehäuseteil (21) eingreift.

13. Achsendanordnung mit der Gehäuseeinheit (2) nach einem der vorhergehenden Ansprüche und der Antriebswelle (9) dieses vorhergehenden Anspruch, wobei die Achsendanordnung den Stator (6) und die Nabe (3) umfasst,
wobei der Flansch (24) der Gehäuseeinheit (2) an der Nabe (3) festgelegt ist,
wobei das zweite Gehäuseteil (22) mittels des Eingriffsabschnitts (25) drehfest am Stator (6) festgelegt ist,
wobei die Antriebswelle (9) innerhalb des Stators (6) angeordnet ist und ein Drehmoment auf die innerhalb der Gehäuseeinheit (2) angeordnete Zahnradanordnung (4) überträgt, welche das erste Gehäuseteil (21) und die Nabe (3) antreibt.

14. Achsendanordnung nach Anspruch 13,
wobei der Eingriffsabschnitt (25) als zylindrischer Abschnitt mit einer Außenverzahnung ausgebildet ist,
wobei am Stator (6) eine parallel zu einer Axialen (A) verlaufende Innenverzahnung vorgesehen ist, welche sich auf gleicher Höhe längs der Axialen (A) wie ein Lagersitz zur drehbaren Lagerung der Nabe (3) am Stator (6) und/oder einer Achsmutter befindet.

15. Achsendanordnung nach einem der Ansprüche 13 oder 14,
wobei der Flansch (24) des ersten Gehäuseteils (21) über eine Vielzahl von Radbolzen (8) an der Nabe (3) festgelegt ist.

## Claims

1. A housing unit (2) and driveshaft (9) for use in an axle end assembly, in particular of a commercial vehicle,
the housing unit (2) having a first housing part (21) and a second housing part (22),
wherein the first and the second housing part (21, 22) are disposed so as to be mutually rotatable and define a housing interior space (G);
wherein the first housing part (21) for establishing on a hub (3) has a flange (24);
wherein the second housing part (22) for safeguarding against rotation in relation to a stator (6) of a wheel suspension has an engagement portion (25);
wherein a gear wheel assembly (4) is disposed in the housing interior space (G) so as to transmit a torque of a driveshaft (9) to the first housing part (21); wherein the driveshaft (9) can be mounted so as to be rotatable within the stator (6),
**characterized in that** the first and the second housing part (21, 22), when dismantling the housing unit (2) from the wheel suspension, are mutually established that the housing interior space (G) remains closed in such a manner that at least 70% of the outwardly protruding faces of the housing unit (2) are closed in a fluid-tight manner.

2. The housing unit (2) and driveshaft (9) as claimed in claim 1,
wherein the housing interior space (G), in the case of the housing unit (2) being dismantled from the wheel suspension, is open toward the environment exclusively in the region of the engagement portion (25).

3. The housing unit (2) and driveshaft (9) as claimed in claim 2,
wherein a clearance (23) through which the driveshaft (9) is able to be guided is provided in the region of the engagement portion (25) on the second housing part (22).

4. The housing unit (2) and driveshaft (9) as claimed in claim 3,
wherein the clearance (23) has a minimum internal diameter (D₂₃) which is 1.05 to 1.3 times the maximum external diameter (D₉) of the driveshaft (9), or the maximum external diameter (D_{4A}) of a first gear wheel (4A) of the gear wheel assembly (4).

5. The housing unit (2) and driveshaft (9) as claimed in claim 1,
wherein the housing interior space (G) in the case of the housing unit (2) being dismantled from the wheel suspension, is completely closed; wherein a shaft element (91) protrudes from the housing interior space (G) and by means of a shaft seal (92) is sealed in relation to the second housing part (22).

6. The housing unit (2) and driveshaft (9) as claimed in claim 5,
wherein a transmission portion (93) by way of which the driveshaft (9) for transmitting a torque can be brought to engage in a form-fitting manner is provided on the shaft element (91).

7. The housing unit (2) and driveshaft (9) as claimed in one of the preceding claims,
wherein the establishing of the flange (25) on the hub (3) secures the housing unit (2) in relation to being repositioned along an axial (A).

8. The housing unit (2) and driveshaft (9) as claimed in claim 7,
wherein the engagement portion (25) is configured as a cylindrical portion having an external toothing;
wherein the engagement portion (25) is able to be push-fitted along the axial (A) into the stator (6) so as to come to engage in a rotationally fixed manner with an internal toothing on the stator (6).

9. The housing unit (2) and driveshaft (9) as claimed in claim 7,
wherein the engagement portion (25) is configured as a cylindrical portion having an internal toothing;
wherein the engagement portion (25) is able to be push-fitted along the axial (A) onto the stator (6) so as to come to engage in a rotationally fixed manner with an external toothing on the stator (6).

10. The housing unit (2) and driveshaft (9) as claimed in one of the preceding claims
wherein the first housing part (21) in regions overlaps the second housing part (22);
wherein a sealing element (26) which seals the housing interior space (G) is provided in the region of said overlap;
wherein the sealing element (26) secures the first and the second housing part (21, 22) in the mutual axial position thereof.

11. The housing unit (2) and driveshaft (9) as claimed in claim 10,
wherein the sealing element (26) is press-fitted into the first housing part (21).

12. The housing unit (2) and driveshaft (9) as claimed in one of the preceding claims,
wherein the gear wheel assembly (4) comprises a first gear wheel (4A) which is drivable or driven indirectly or directly by the driveshaft (9);
wherein the gear wheel assembly (4) comprises at least a second gear wheel (4B) which engages in a second internal toothing (Z₂) on the second housing part (22) and transmits a torque to a third gear wheel (4C) which engages in a first internal toothing (Z₁) on the first housing part (21).

13. An axle end assembly with the housing unit (2) as claimed in one of the preceding claims and the driveshaft of this preceding claim, wherein the axle end assembly comprises the stator (6) and the hub (3),
wherein the flange (24) of the housing unit (2) is established on the hub (3);
wherein the second housing part (22) by means of the engagement portion (25) is established in a rotationally fixed manner on the stator (6);
wherein the driveshaft (9) is disposed within the stator (6) and transmits a torque to the gear wheel assembly (4) that is disposed within the housing unit (2), said torque driving the first housing part (21) and the hub (3).

14. The axle end assembly as claimed in claim 13,
wherein the engagement portion (25) is configured as a cylindrical portion having an external toothing;
wherein an internal toothing which runs so as to be parallel to an axial (A) and which along the axial (A) is situated at the same level as a bearing seat for the rotatable mounting of the hub (3) on the stator (6) and/or an axle nut is provided.

15. The axle end assembly as claimed in one of claims 13 or 14,
wherein the flange (24) of the first housing part (21) is established on the hub (3) by way of a multiplicity of wheel bolts (8).

## Revendications

1. Unité de boîtier (2) et arbre d'entraînement (9) destinés à être utilisés dans un ensemble d'extrémité d'essieu, en particulier d'un véhicule utilitaire,
dans lesquels
l'unité de boîtier (2) comprend une première partie de boîtier (21) et une deuxième partie de boîtier (22),
les première et deuxième parties de boîtier (21, 22) sont disposées de façon mobile en rotation l'une par rapport à l'autre et définissent un espace intérieur de boîtier (G),
la première partie de boîtier (21) comprend une bride (24) destinée à être immobilisée sur un moyeu (3),
la deuxième partie de boîtier (22) comprend une portion d'engagement (25) pour le blocage en rotation par rapport à un stator (6) d'une suspension de roue,
un ensemble de roues dentées (4) est disposé dans l'espace intérieur de boîtier (G) pour transmettre un couple de rotation d'un arbre d'entraînement (9) à la première partie de boîtier (21),
l'arbre d'entraînement (9) peut être monté de façon mobile en rotation à l'intérieur du stator (6),
**caractérisés en ce que**
les première et deuxième parties de boîtier (21, 22) sont immobilisées l'une à l'autre de telle sorte que, lors du démontage de l'unité de boîtier (2) de la suspension de roue, l'espace intérieur de boîtier (G) reste fermé de telle sorte qu'au moins 70 % des surfaces de l'unité de boîtier (2) dépassant vers l'extérieur sont fermés de façon étanche aux fluides.

2. Unité de boîtier (2) et arbre d'entraînement (9) selon la revendication 1, dans lesquels, l'unité de boîtier (2) étant démontée de la suspension de roue, l'espace intérieur de boîtier (G) est ouvert vers l'environnement exclusivement dans la zone de la portion d'engagement (25).

3. Unité de boîtier (2) et arbre d'entraînement (9) selon la revendication 2, dans lesquels un évidement (23) est prévu dans la zone de la portion d'engagement (25) sur la deuxième partie de boîtier (22), à travers lequel l'arbre d'entraînement (9) peut être passé.

4. Unité de boîtier (2) et arbre d'entraînement (9) selon la revendication 3, dans lesquels l'évidement (23) présente un diamètre intérieur minimal (D₂₃) qui est de 1,05 à 1,3 fois le diamètre extérieur maximal (D₉) de l'arbre d'entraînement (9) ou le diamètre extérieur maximal (D_{4A}) d'une première roue dentée (4A) de l'ensemble de roues dentées (4).

5. Unité de boîtier (2) et arbre d'entraînement (9) selon la revendication 1, dans lesquels l'espace intérieur de boîtier (G) est entièrement fermé lorsque l'unité de boîtier (2) est démontée de la suspension de roue,
un élément d'arbre (91) dépasse hors de l'espace intérieur de boîtier (G) et est rendu étanche par rapport à la deuxième partie de boîtier (22) au moyen d'un joint d'étanchéité d'arbre (92).

6. Unité de boîtier (2) et arbre d'entraînement (9) selon la revendication 5, dans lesquels une portion de transmission (93) est prévue sur l'élément d'arbre (91), avec laquelle l'arbre d'entraînement (9) peut être mis en engagement par coopération de forme pour transmettre un couple de rotation.

7. Unité de boîtier (2) et arbre d'entraînement (9) selon l'une des revendications précédentes,
dans lesquels l'immobilisation de la bride (25) sur le moyeu (3) bloque l'unité de boîtier (2) à l'encontre d'un déplacement le long d'une ligne axiale (A).

8. Unité de boîtier (2) et arbre d'entraînement (9) selon la revendication 7, dans lesquels la portion d'engagement (25) est réalisée sous forme de portion cylindrique ayant une denture extérieure,
la portion d'engagement (25) peut être insérée dans le stator (6) le long de la ligne axiale (A), afin de venir en engagement solidaire en rotation avec une denture intérieure sur le stator (6).

9. Unité de boîtier (2) et arbre d'entraînement (9) selon la revendication 7, dans lesquels la portion d'engagement (25) est réalisée sous forme de portion cylindrique ayant une denture intérieure,
la portion d'engagement (25) peut être enfilée sur le stator (6) le long de la ligne axiale (A), afin de venir en engagement solidaire en rotation avec une denture extérieure sur le stator (6).

10. Unité de boîtier (2) et arbre d'entraînement (9) selon l'une des revendications précédentes,
dans lesquels la première partie de boîtier (21) chevauche localement la deuxième partie de boîtier (22),
un élément d'étanchéité (26) est prévu dans la zone dudit chevauchement, lequel rend étanche l'espace intérieur de boîtier (G),
l'élément d'étanchéité (26) bloque les première et deuxième parties de boîtier (21, 22) dans leur position axiale l'une par rapport à l'autre.

11. Unité de boîtier (2) et arbre d'entraînement (9) selon la revendication 10,
dans lesquels l'élément d'étanchéité (26) est pressé dans la première partie de boîtier (21).

12. Unité de boîtier (2) et arbre d'entraînement (9) selon l'une des revendications précédentes,
dans lesquels l'ensemble de roues dentées (4) comprend une première roue dentée (4A) qui peut être entraînée ou est entraînée directement ou indirectement par l'arbre d'entraînement (9),
l'ensemble de roues dentées (4) comprend au moins une deuxième roue dentée (4B) qui s'engage dans une deuxième denture intérieure (Z₂) sur la deuxième partie de boîtier (22) et transmet un couple à une troisième roue dentée (4C) qui s'engage dans une première denture intérieure (Z₁) sur la première partie de boîtier (21).

13. Ensemble d'extrémité d'essieu comprenant l'unité de boîtier (2) selon l'une des revendications précédentes et l'arbre d'entraînement (9) selon la revendication précédente,
dans lequel l'ensemble d'extrémité d'essieu comprend le stator (6) et le moyeu (3),
la bride (24) de l'unité de boîtier (2) est immobilisée sur le moyeu (3),
la deuxième partie de boîtier (22) est immobilisée solidairement en rotation sur le stator (6) au moyen de la portion d'engagement (25),
l'arbre d'entraînement (9) est disposé à l'intérieur du stator (6) et transmet un couple de rotation à l'ensemble de roues dentées (4) disposé à l'intérieur de l'unité de boîtier (2), qui entraîne la première partie de boîtier (21) et le moyeu (3).

14. Ensemble d'extrémité d'essieu selon la revendication 13,
dans lequel la portion d'engagement (25) est réalisée sous forme de portion cylindrique ayant une denture extérieure,
une denture intérieure s'étendant parallèlement à une ligne axiale (A) est prévue sur le stator (6), laquelle se trouve à la même hauteur le long de la ligne axiale (A) qu'un siège de palier pour le montage rotatif du moyeu (3) sur le stator (6) et/ou d'un écrou d'essieu.

15. Ensemble d'extrémité d'essieu selon l'une des revendications 13 ou 14, dans lequel la bride (24) de la première partie de boîtier (21) est immobilisée sur le moyeu (3) par l'intermédiaire d'une pluralité de boulons de roue (8).
